Europäisches Patentamt

European Patent Office

Office européen des brevets

(11) Publication number: **0 032 023**
**B1**

(12) # EUROPEAN PATENT SPECIFICATION

(45) Date of publication of patent specification: **18.04.84**

(51) Int. Cl.³: **B 23 P 1/08**

(21) Application number: **80304584.8**

(22) Date of filing: **18.12.80**

(54) **A power source for an electric discharge machine.**

(30) Priority: **22.12.79 JP 167924/79**

(43) Date of publication of application:
**15.07.81 Bulletin 81/28**

(45) Publication of the grant of the patent:
**18.04.84 Bulletin 84/16**

(84) Designated Contracting States:
**CH DE FR GB LI**

(56) References cited:
**FR - A - 1 354 354**
**FR - A - 2 242 191**

(73) Proprietor: **FANUC LTD**
**5-1, Asahigaoka 3-chome Hino-shi**
**Tokyo 191 (JP)**

(72) Inventor: **Haruki, Obara**
**No. 844-7, Hashimoto, Sagamihara-shi**
**Kanagawa, 229 (JP)**

(74) Representative: **Billington, Lawrence Emlyn et al,**
**HASELTINE LAKE & CO Hazlitt House 28**
**Southampton Buildings Chancery Lane**
**London WC2A 1AT (GB)**

Courier Press, Leamington Spa, England.

A power source for an electric discharge machine

The present invention relates to a power source for producing a discharge, for example between a wire electrode and a workpiece in a wire cut electric discharge machine.

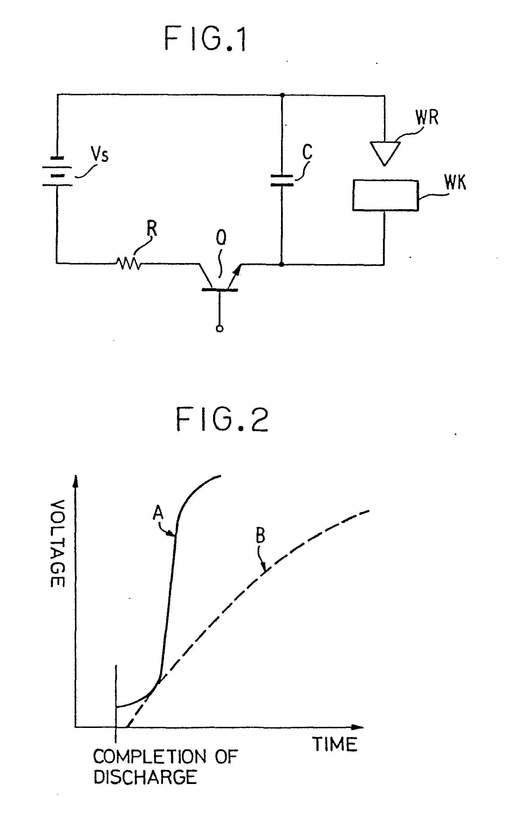

A known power source of this kind is such, for example, as shown in Figure 1. In Figure 1, reference character WR indicates a wire electrode; WK designates a workpiece; Vs identifies a DC power supply; C denotes a capacitor; R represents a charging resistor; and Q shows a switching element such as a transistor or the like. By repeating ON-OFF operation of the switching element Q, the capacitor C is charged by the DC power supply Vs via the charging resistor R. The charged voltage is applied across the wire electrode WR and the workpiece WK and a discharge current of the capacitor C flows, as a discharge, in a discharge gap defined between the wire electrode WR and the workpiece WK, performing electric discharge machining of the latter. A similar arrangement is known from French Patent No. 1,354,354.

For the repetition of a stable discharge in electric discharge machining, a necessary and sufficient discharge suspension period is required for each discharge and, at the same time, care should be taken in the voltage application at the start of the next stable discharge. The insulation recovery characteristic of the discharge gap after a discharge is such as schematically indicated by the solid line A in Figure 2. When a voltage higher than the curve A (which voltage will hereinafter be referred to as the redischarge voltage) is applied across the discharge gap, it is likely that a discharge is repeatedly produced at the same position or that an arc discharge results.

With a view to settling this problem, in the prior art circuit of Figure 1 the charging time constant of the capacitor C is selected large so that its charging characteristic curve may not exceed the insulation recovery characteristic curve A, that is, so that the discharge voltage as indicated by the broken line B in Figure 2 is achieved. Accordingly, the frequency of discharge per unit time cannot be increased and the cutting speed cannot be raised. Furthermore, the conventional circuit is a dependent discharge circuit, which may sometimes be discharged before the capacitor C is sufficiently charged and consequently the discharge energy varies for each discharge, resulting in the defect that a satisfactory surface smoothness of the workpiece is difficult to obtain.

According to the invention there is provided a power source for an electric discharge machine, the power source comprising:
a capacitor which is to be charged by a power supply for supplying discharge energy across an electrode of the machine and a workpiece when the power source is in use; a switching element inserted in a discharge path of the capacitor; and control means operable for turning ON the switching element when a charge voltage of the capacitor reaches a predetermined level, and for turning OFF the switching element upon completion of a discharge; characterised in that the charging time constant of the capacitor is selected sufficiently small so that when the power source is in use the charged voltage exceeds a redischarge voltage across a machining gap defined between the electrode and the workpiece at an early stage of charging the capacitor, and wherein the switching element is arranged to be turned ON at such a moment that, as a result of the normal abrupt increase of the redischarge voltage in the gap voltage-time characteristic, the charged voltage of the capacitor is smaller than the redischarge voltage.

A preferred embodiment of the present invention provides a power source suitable for use in wire-cut electric discharge machines, which permits an increase in the frequency of discharge per unit time in the working gap, thereby to raise the cutting speed. It also may provide a uniform discharge energy for each discharge in the working gap, thereby improving the surface smoothness of a workpiece.

For a better understanding of the present invention and to show how it may be put into effect reference will now be made, by way of example, to the accompanying drawings in which:

Figure 1 is an electric circuit diagram showing a conventional wire-cut electric discharge machine power source;

Figure 2 is a graph showing the relationship between the insulation recovery characteristic of a discharge gap and the charging characteristic of a capacitor;

Figure 3 is a block diagram illustrating the principal part of an embodiment of the wire-cut electric discharge machine power source of the present invention;

Figure 4 is a graph showing variations in a charged voltage $V_C$ of a capacitor C, a gap voltage $V_G$, a discharge current I and the operation of a switching element TR with time in the case where the power source of Figure 3 was operated; and

Figure 5 is a graph showing the relationship between the insulation recovery characteristic of the discharge gap and the gap voltage $V_G$.

Figures 1 and 2 have already been described in detail.

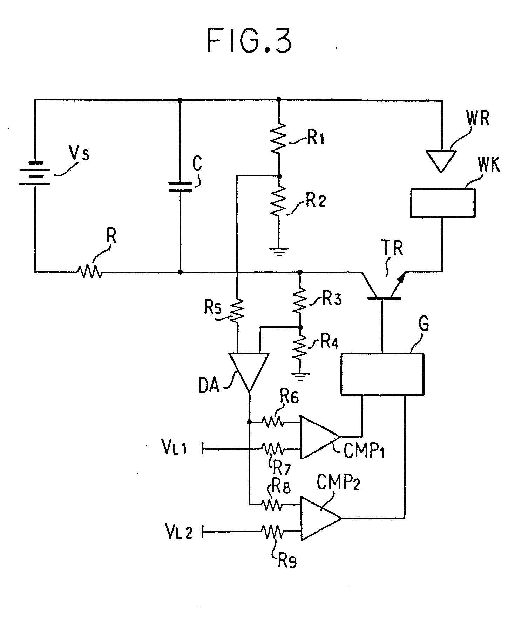

Figure 3 illustrates in block form the principal part of an embodiment of the present invention, in which the parts corresponding to those in Figure 1 are identified by the same reference characters. In Figure 3, reference character TR indicates a transistor or like switching element; $R_1$ to $R_9$ designate resistors; DA identifies a differential amplifier; $CMP_1$ and

$CMP_2$ denote comparators; $V_{L1}$ and $V_{L2}$ represent reference voltages; and G shows a gate circuit.

Unlike the circuit of Figure 1, the present embodiment is arranged so that the capacitor C may always be charged by the DC power supply Vs via the charging resistor R, and that charges stored in the capacitor C are applied across the wire electrode WR and the work WK via the switching element TR inserted in the discharge path of the capacitor C. The charged voltage of the capacitor C is detected by the resistors $R_1$ to $R_5$ and the differential amplifier DA, and provided to one input terminal of the comparator $CMP_1$ via the resistor $R_6$ and to one input terminal of the comparator $CMP_2$ via the resistor $R_8$. The comparator $CMP_1$ makes a comparison between the output from the differential amplifier DA and the reference voltage $V_{L1}$ applied to the other input terminal, thereby to detect that the charged voltage of the capacitor C has reached a predetermined level suitable for discharging. The comparator $CMP_2$ compares the output from the differential amplifier DA with the reference voltage $V_{L2}$ applied to the other input terminal, thereby to detect that the charged voltage of the capacitor C has been reduced to substantially zero. The gate circuit G performs logical processing of the outputs from the comparators $CMP_1$ and $CMP_2$ to achieve ON-OFF control of the switching element TR.

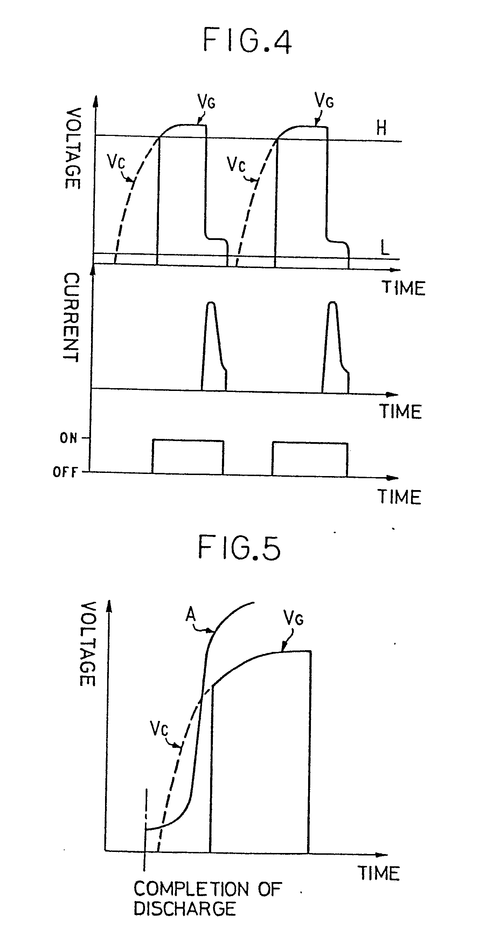

Figure 4 shows variations in the charged voltage $V_C$ of the capacitor C, the gap voltage $V_G$, the discharge current I and the operation of the switching element TR with time when the device of Figure 3 was operated. A description will be given, with reference to Figure 4, of the operation of the embodiment of Figure 3.

When the capacitor C is charged by the DC power supply Vs with the characteristic indicated by the curve $V_C$ in Figure 4 and its potential reaches a predetermined level H suitable for discharging, this is detected by the comparator $CMP_1$ and the gate circuit G turns ON the switching element TR. As a consequence, the charged voltage $V_C$ of the capacitor C is applied as the gap voltage $V_G$ across the wire electrode WR and the workpiece WK and, after a very short period of time, the discharge current I flows in the discharge gap to effect electric discharge machining of the workpiece WK. When the discharge is started, the charged voltage of the capacitor C rapidly drops and it is detected by the comparator $CMP_2$ that the charged voltage becomes lower than the predetermined level L, i.e. becomes substantially equal to zero. The gate circuit G detects the completion of the discharge from the output from the comparator $CMP_2$ and quickly turns OFF the switching element TR and, by this operation, the capacitor C is charged again to be ready for the next discharge.

Figure 5 is a graph showing the relationship between the insulation recovery characteristic of the discharge gap and the gap voltage $V_G$. It appears from Figure 5 that even if the capacitor C is charged so rapidly that the charged voltage exceeds the redischarge voltage A as indicated by the curve $V_C$, the voltage is not provided across the discharge gap because the switching element TR is in the OFF state in the region above the redischarge voltage, and that the voltage is applied across the discharge gap at a moment when the charged voltage $V_C$ of the capacitor C has become lower than the redischarge voltage A. Thus it can be seen from Figure 5 that the switching element TR is turned ON at a moment when the charged voltage of the capacitor C is small relative to the redischarge voltage A, as a result of an abrupt increase in the latter. Since the redischarge voltage across the discharge gap undergoes various changes during machining, the arrangement described previously is not quite free from abnormal discharge. By a suitable selection of the level H in Figure 4 and the charging time constant of the capacitor C in view of an average redischarge voltage characteristic, however, sufficiently stable discharging is possible and, in addition, the frequency of discharging can markedly be increased. Moreover, since the discharge is started when the charged voltage $V_C$ of the capacitor C reaches a predetermined level, the energy for each discharge is uniform.

As will be appreciated from the foregoing description, since no voltage is applied across the discharge gap until the switching element TR is turned ON, even if the capacitor is rapidly charged, there does not occur an abnormal discharge as in the prior art; accordingly, the frequency of discharging can be raised, permitting an increase in the cutting speed. Furthermore, since the energy for each discharge is made uniform, a worked surface of good quality can be obtained.

It will be apparent that many modifications and variations may be effected without departing from the scope of the novel concepts of the present invention.

**Claims**

1. A power source for an electric discharge machine, the power source comprising:

a capacitor (C) which is to be charged by a power supply (Vs) for supplying discharge energy across an electrode (WR) of the machine and a workpiece (WK) when the power source is in use; a switching element (TR) inserted in a discharge path of the capacitor (C); and control means (G etc.) operable for turning ON the switching element (TR) when a charged voltage of the capacitor (C) reaches a predetermined level, and for turning OFF the switching element (TR) upon completion of a discharge; characterised in that the charging time constant of the capacitor (C) is selected sufficiently small so that when the power source is in use the charged voltage exceeds a redischarge voltage (A) across a machining gap defined between the electrode (WR) and the workpiece (WK) at an early stage of charging the capacitor (C), and wherein the switching element (TR) is arranged to be turned ON at such a moment that, as a result of the normal abrupt increase of the redischarge voltage (A) in the gap voltage-time characteristic, the charged voltage of the capacitor (C) is smaller than the redischarge voltage.

2. A power source according to claim 1, wherein said control means comprises: a differential amplifier (DA) for detecting the charged voltage of the capacitor (C); a first comparator (CMP$_1$) for comparing the output from the differential amplifier (DA) and said predetermined level to detect when the charged voltage of the capacitor (C) reaches said predetermined level; a second comparator (CMP$_2$) for comparing the output from the differential amplifier (DA) and a reference voltage to detect when the charged voltage of the capacitor (C) becomes substantially zero; and a gate circuit (G) which is to be supplied with the outputs from the first and second comparators thereby to generate a control signal for the switching element (TR).

3. A power source according to any one of the preceding claims, which is for a wire-cut electric discharge machine.

4. An electric discharge machine comprising a power source according to any one of the preceeding claims.

5. An electric discharge machine according to claim 4, which is a wire-cut electric discharge machine.

**Revendications**

1. Une alimentation électrique pour une machine d'électro-érosion, cette alimentation électrique comprenant:

un condensateur (C) qui est destiné à être chargé par une source d'énergie (Vs) pour fournir de l'énergie de décharge entre une électrode (WR) de la machine et une pièce à usiner (WK), lorsque l'alimentation électrique est en fonction; un élément de commutation (TR) intercalé dans un circuit de décharge du condensateur (C); et des moyens de commande (G, etc) capables de débloquer l'élément de commutation (TR) lorsqu'une tension de charge du condensateur (C) atteint un niveau prédéterminé, et de bloquer l'élément de commutation (TR) à l'achèvement d'une décharge; caractérisée en ce que la constante de temps de charge du condensateur (C) est choisie à une valeur suffisamment faible pour que lorsque l'alimentation électrique est en fonction, la tension de charge dépasse une tension de réamorçage (A) aux bornes d'un intervalle d'usinage qui est défini entre l'électrode (WR) et la pièce à usiner (WK) au cours d'une phase initiale de la charge du condensateur (C), et en ce que l'élément de commutation (TR) est conçu de façon à être débloqué à un moment tel que, sous l'effet de l'augmentation abrupte normale de la tension de réamorçage (A) dans la caractéristique tension-temps de l'intervalle, la tension de charge du condensateur (C) soit inférieure à la tension de réamorçage.

2. Une alimentation électrique selon la revendication 1, dans laquelle les moyens de commande comprennent: un amplificateur différentiel (DA) destiné à détecter la tension de charge du condensateur (C); un premier comparateur (CMP$_1$) destiné à comparer le signal de sortie de l'amplificateur différentiel (DA) et le niveau prédéterminé pour détecter le moment auquel la tension de charge du condensateur (C) atteint le niveau prédéterminé; un second comparateur (CMP$_2$) destiné à comparer le signal de sortie de l'amplificateur différentiel (DA) et une tension de référence pour détecter le moment auquel la tension de charge du condensateur (C) devient pratiquement égale à zéro; et un circuit de porte (G) qui est destiné à recevoir les signaux de sortie des premier et second comparateurs, pour produire ainsi un signal de commande pour l'élément de commutation (TR).

3. Une alimentation électrique selon l'une quelconque des revendications précédentes, qui est destinée à une machine d'électro-érosion à fil coupant.

4. Une machine d'électro-érosion comprenant une alimentation électrique selon l'une quelconque des revendications précédentes.

5. Une machine d'électro-érosion selon la revendication 4, qui est une machine d'électro-érosion à fil coupant.

**Patentansprüche**

1. Stromquelle für eine mit elektrischer Entladung arbeitende Maschine, mit einem Kondensateor (C), der durch eine Stromversorgung (Vs) zu laden ist, um einer Elektrode (WR) der Maschine und einem Werkstück (WK) Entladungsenergie zuzuführen, wenn die Stromquelle in Betrieb ist, einem Schalterelement (TR), das in einen Entladungspfad des Kondensators (C) eingefügt ist, sowie einer Steuereinrichtung (G etc.), die zum Einschalten des Schalterelements (TR) in Tätigkeit tritt, wenn eine aufgeladene Spannung des Kondensators (C) einen vorbestimmten Pegel erreicht, und zum Ausschalten des Schalterelements (TR) bei Beendigung der Entladung, dadurch gekennzeichnet, daß die Ladezeitkonstante des Kondensators (C) ausreichend klein gewählt ist, so daß, wenn die Stromquelle in Betrieb ist, die aufgeladene Spannung eine Wiederentladespannung (redischarge voltage) (A) an einem Bearbeitungsspalt, der zwischen der Elektrode (WR) und dem Werkstück (WK) definiert ist, in einem frühen Stadium der Ladung des Kondensators (C) übersteigt, und daß das Schalterelement (TR) so eingerichtet ist, daß es in solch einem Moment eingeschaltet wird, daß als Folge des normalen abrupten Anstiegs der Wiederentladespannung (A) in der Spaltspannungs-Zeit-Charakteristik die aufgeladene Spannung des Kondensators (C) kleiner ist als die Wiederentladespannung.

2. Stromquelle nach Anspruch 1, dadurch gekennzeichnet, daß die Steuereinrichtung umfaßt: einen Differentialverstärker (DA) zur Ermittlung der aufgeladenen Spannung des Kondensators (C), einen ersten Komparator ($CMP_1$) zum Vergleichen des Ausgangssignals von dem Differentialverstärker (DA) und des vorbestimmten Pegels, um zu ermitteln, wann die aufgeladene Spannung des Kondensators (C) den vorbestimmten Pegel erreicht, einen zweiten Komparator ($CMP_2$) zum Vergleichen des Ausgangssignals von dem Differentialverstärker (DA) und einer Bezugsspannung, um zu ermitteln, wann, die aufgeladene Spannung des Kondensators (C) im wesentlichen null wird, sowie, einen Gatterschaltkreis (G), welchem die Ausgangssignale von dem ersten und dem zweiten Komparator zuzuführen sind, un dadurch ein Steuersignal für das Schalterelement (TR) zu erzeugen.

3. Stromquelle nach einem der vorhergehenden Ansprüche, dadurch gekennzeichnet, daß sie für eine mit elektrischer Entladung arbeitende Schneiddrahtmaschine vorgesehen ist.

4. Mit elektrischer Entladung arbeitende Maschine, gekennzeichnet durch eine Stromquelle nach einem der vorhergehenden Ansprüche.

5. Mit elektrischer Entladung arbeitende Maschine nach Anspruch 4, dadurch gekennzeichnet, daß es eine Schneiddrahtmaschine ist.

# FIG.1

# FIG.2

# FIG.3

# FIG.4

# FIG.5

COMPLETION OF DISCHARGE

3